# EUROPÄISCHE PATENTSCHRIFT

(11) **EP 0 876 950 B1**
(45) Veröffentlichungstag und Bekanntmachung des Hinweises auf die Patenterteilung: **01.08.2001**
(21) Anmeldenummer: 98107913.0
(22) Anmeldetag: 30.04.1998
(51) Int. Cl.: B62D 5/06

(54) **Hilfskraftlenkung für Kraftfahrzeuge**
Power assisted steering for motor vehicles
Direction assistée pour véhicules automobiles

(30) Priorität: 05.05.1997 DE 19718585
(43) Veröffentlichungstag der Anmeldung: 11.11.1998
(73) Patentinhaber: ZF FRIEDRICHSHAFEN Aktiengesellschaft, 88038 Friedrichshafen (DE)
(72) Erfinder: Elser, Dieter, 73547 Essingen (DE)
(74) Vertreter: Wiechmann, Manfred

(56) Entgegenhaltungen:
- EP-A- 0 154 388
- DE-A- 2 652 815
- DE-A- 2 918 975
- DE-A- 3 918 987

## Beschreibung

Die Erfindung betrifft eine Hilfskraftlenkung für Kraftfahrzeuge, insbesondere für Nutzfahrzeuge, nach dem Oberbegriff des Anspruches 1. Eine solche Hilfskraftlenkung enthält wenigstens zwei voneinander getrennte Hilfskraftkreise, von denen wenigstens der erste einen Servomotor mit einem durch die Kraft eines hydraulischen Druckmittels verschiebbaren Kolben enthält. Ein Steuerventil dient zum Steuern des hydraulischen Druckmittels zu und von den Arbeitsräumen des Servomotors. Ein Lenkgetriebe dient zum Umwandeln einer Drehbewegung einer Lenkspindel in eine hin-und hergehende Bewegung des Kolbens. Eine mit einem Lenkhandrad versehene Lenkspindel ist über eine Torsionsfeder mit einem Eingangsglied des Lenkgetriebes verbunden. Ein Ausgangsglied des Lenkgetriebes ist mit zu lenkenden Rädern des Kraftfahrzeugs verbunden.

Eine derartige Hilfskraftlenkung ist bekannt aus der DE 29 18 975 C2. Diese Hilfskraftlenkung weist zwei hydraulisch voneinander getrennte Hilfskraftkreise auf. Das Lenkgetriebe dieser Hilfskraftlenkung baut in Axialrichtung relativ lang, da zwei Steuerventile der beiden Hilfskraftkreise an der Lenkspindel nebeneinander angeordnet sind. Eine hydraulische Unterstützung der Rückstellung des Lenkgetriebes und der zu lenkenden Räder nach einem Loslassen des Lenkhandrades nach einem Lenkvorgang ist bei dieser Hilfskraftlenkung nicht vorgesehen.

Der Erfindung liegt die Aufgabe zugrunde, bei einer Hilfskraftlenkung nach dem Oberbegriff des Anspruches 1 das Lenkgetriebe in Richtung seiner Lenkspindel zu verkürzen.

Diese Aufgabe wird durch die im Anspruch 1 gekennzeichnete Hilfskraftlenkung dadurch gelöst, daß an der Lenkspindel wenigstens ein Sensor zum Erfassen eines Drehwinkels und/oder eines Drehmomentes angeordnet ist. Außerdem ist wenigstens ein Sensor zum Erfassen eines Lenkwinkels an einem Eingangs- oder an einem Ausgangsglied des Lenkgetriebes angeordnet. Mit Hilfe dieser Sensoren werden die Größe und die Richtung der hydraulischen Hilfskraftunterstützung in dem zweiten Hilfskraftkreis über ein gemeinsames, elektronisch gesteuertes Elektromagnetventil gesteuert. Dadurch kann das zweite Steuerventil an der Lenkspindel entfallen. Der dort angeordnete Sensor baut kürzer als das zweite Steuerventil.

Vorteilhafte und zweckmäßige Ausgestaltungen der Erfindung sind in den Unteransprüchen angegeben. Dazu ist insbesondere vorgesehen, daß das Elektromagnetventil die hydraulische Unterstützung zur Rückstellung des Lenkgetriebes und der zu lenkenden Räder nach einem Loslassen des Lenkhandrades nach einem Lenkvorgang steuert. Außerdem ist eine Parameter-Einrichtung vorgesehen für eine Beeinflussung der Hilfskraftunterstützung der beiden Hilfskraftkreise über eine Elektronik-Einheit in Abhängigkeit von wenigstens einem Parameter, wie Fahrgeschwindigkeit des Fahrzeugs, Lenkgeschwindigkeit, Giergeschwindigkeit, Beladung des Fahrzeugs, und anderen. Zur Steuerung der Parameter-Einrichtung ist es besonders vorteilhaft, wenn der zweite Hilfskraftkreis gegenüber dem ersten Hilfskraftkreis voreilt.

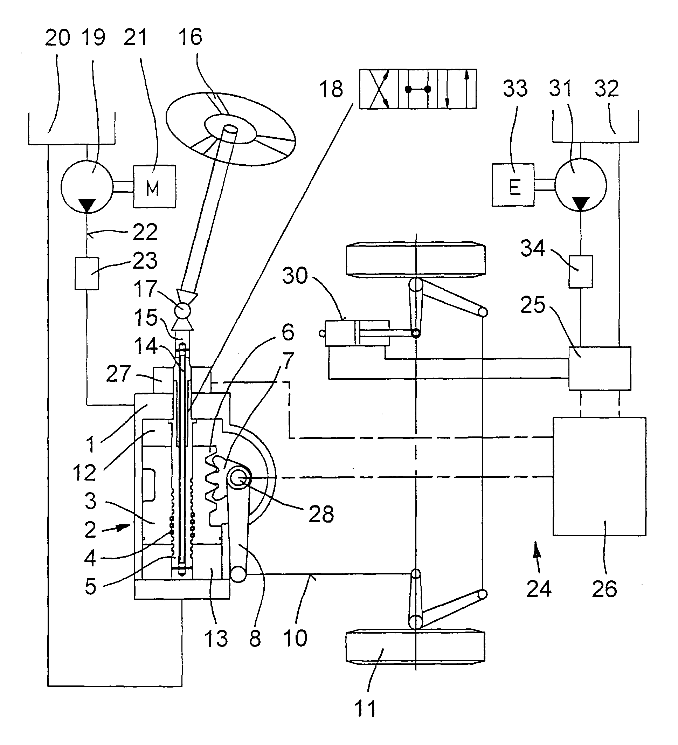

Im folgenden wird die Erfindung anhand eines in der Zeichnung dargestellten Ausführungsbeispieles näher erläutert. Die einzige Figur zeigt in schematischer Darstellung einen Schnitt durch das Lenkgetriebe mit den weiteren Elementen der Hilfskraftlenkung, insbesondere mit den beiden Hilfskraftkreisen.

Die Erfindung wird am Beispiel einer Kugelmutter-Hilfskraftlenkung erläutert. Mit gleicher Wirkung kann die Erfindung jedoch auch auf Zahnstangen-Hilfskraftlenkungen angewendet werden.

In einem Lenkgehäuse 1 enthält ein Lenkgetriebe 2 einen Arbeitskolben 3, der über eine Kugelreihe 4 mit einer Gewindespindel 5 und über eine Verzahnung 6 mit einer Segmentwelle 7 trieblich verbunden ist. Dabei bildet die Gewindespindel 5 ein Eingangsglied des Lenkgetriebes 2 und die Segmentwelle 7 ein Ausgangsglied des Lenkgetriebes 2.

Von der Segmentwelle 7 besteht über einen Lenkstockhebel 8 und ein Lenkgestänge 10 eine Verbindung zu wenigstens zwei zu lenkenden Rädern 11 des Kraftfahrzeuges.

In dem Gehäuse sind zwei zylindrische Arbeitsräume 12 und 13 gebildet, die durch den Arbeitskolben 3 voneinander getrennt sind. Diese Teile bilden zusammen einen Servomotor.

Die Gewindespindel 5 als Eingangsglied des Lenkgetriebes 2 ist über eine Torsionsfeder 14 mit einer Lenkspindel 15 verbunden, die ein Lenkhandrad 16 trägt. Die Lenkspindel 15 kann durch ein Kreuzgelenk 17 unterteilt sein.

Die beiden Arbeitsräume 12 und 13 sind über ein Steuerventil 18 mit Druckmittel beaufschlagbar, das eine Servopumpe 19 aus einem Behälter 20 fördert. Die Servopumpe 19 wird beispielsweise von einem Fahrzeugmotor 21 oder einem Elektromotor angetrieben.

Das Steuerventil 18 ist in dem Ausführungsbeispiel als Ventil mit offener Mitte ausgeführt. Es kann jedoch auch mit geschlossener Mitte ausgeführt werden, wobei zusätzlich zu der Servopumpe 19 ein nicht dargestellter Druckmittelspeicher vorhanden sein muß.

In eine Druckleitung 22, die von der Servopumpe 19 zu dem Steuerventil 18 führt, ist in bekannter Weise ein Durchflußanzeiger 23 eingebaut. Über den Durchflußanzeiger 23 kann der Fahrer des Kraftfahrzeugs von einem evtl. auftretenden Fehler in der Druckmittelversorgung unterrichtet werden.

Aus der bisherigen Beschreibung wird deutlich, daß es sich hierbei um ein "normales" Lenkgetriebe mit einem Hilfskraftkreis zur Hilfskraftunterstützung handelt.

Ein zweiter Hilfskraftkreis 24 enthält ein Elektromagnetventil 25, beispielsweise ein Proportionalventil, das durch eine Elektronik-Einheit 26 geregelt wird. Die Elektronik-Einheit 26 bekommt Signale von wenigstens einem ersten Sensor 27 zum Erfassen eines Lenkwinkels und/oder eines Drehmomentes, der an der Lenkspindel 15 angeordnet ist. Ein zweiter Sensor 28 zum Erfassen eines Lenkwinkels ist an dem Ausgangsglied, der Segmentwelle 7, des Lenkgetriebes 2 angeordnet und liefert die entsprechenden Signale an die Elektronik-Einheit 26. Mit gleicher Wirkung kann der Sensor auch an dem Eingangsglied des Lenkgetriebes 2 angeordnet sein.

Zwei Arbeitsräume eines Servomotors 30 können über das Elektromagnetventil 25 mit Druckmittel beaufschlagt werden, das eine Servopumpe 31 aus einem Behälter 32 fördert. Die Servopumpe 31 wird beispielsweise von einem Elektromotor 33 oder von den Rädern 11 des Kraftfahrzeugs angetrieben. In dem Ausführungsbeispiel ist das Elektromagnetventil 25 mit offener Mitte ausgebildet. Bei einem System mit geschlossener Mitte wird zusätzlich zu der Servopumpe 31 ein nicht dargestellter Druckmittelspeicher benötigt. Zwischen der Servopumpe 31 und dem Elektromagnetventil 25 ist auch in dem zweiten Hilfskraftkreis 24 ein Durchflußanzeiger 34 entsprechend dem Durchflußanzeiger 23 des ersten Hilfskraftkreises eingesetzt.

Die Zusatzfunktion der hydraulischen Unterstützung der Rückstellung des Lenkgetriebes 2 und der zu lenkenden Räder 11 nach einem Loslassen des Lenkhandrades 16 nach einem Lenkvorgang wird wie folgt ermöglicht: Da die Forderung besteht, daß die gelenkten Räder ohne Betätigung des Lenkhandrades zurücklaufen sollen, stellt sich das Steuerventil 18 des ersten Hilfskraftkreises über die Torsionsfeder 14 in seine Neutralstellung. Diese Stellung erkennt die Elektronik-Einheit 26, da hierbei keine Relativverdrehung der Sensoren 27 und 28 an der Lenkspindel 15 und an der Segmentwelle 7 existiert. Aus diesem Zustand und der Information des zweiten Sensors 28 an der Lenkwelle 7 (Größe und Richtung der Lenkwellenverdrehung) kann die Elektronik-Einheit 26 den entsprechenden Steuerbefehl berechnen, der die gelenkten Räder 11 mit Hilfe des Servomotors 30 exakt auf die Geradeausfahrtstellung zurückführt.

Sowohl die beiden Sensoren 27 und 28 als auch die Elektronik-Einheit 26 sind redundant ausgeführt. Dadurch können Fehler im Lenksystem erkannt und korrigiert werden.

Wenn der zweite Hydraulikkreis 24 eine engere Ventilkennlinie, d. h. kleinere Steuerwege des Elektromagnetventils 25, aufweist, dann kann man über eine Parameter-Einrichtung die Hilfskraftunterstützung der beiden Hilfskraftkreise über die Elektronik-Einheit 26 in Abhängigkeit von wenigstens einem Parameter beeinflussen. Solche Parameter können beispielsweise sein die Fahrgeschwindigkeit des Fahrzeugs, die Lenkgeschwindigkeit, die Giergeschwindigkeit, die Beladung des Fahrzeugs und andere.

### Bezugszeichen

- 1: Lenkgehäuse
- 2: Lenkgetriebe
- 3: Arbeitskolben
- 4: Kugelreihe
- 5: Gewindespindel
- 6: Verzahnung
- 7: Segmentwelle
- 8: Lenkstockhebel
- 9: -
- 10: Lenkgestänge
- 11: Rad
- 12: Arbeitsraum
- 13: Arbeitsraum
- 14: Torsionsfeder
- 15: Lenkspindel
- 16: Lenkhandrad
- 17: Kreuzgelenk
- 18: Steuerventil
- 19: Servopumpe
- 20: Behälter
- 21: Fahrzeugmotor
- 22: Zuleitung
- 23: Durchflußanzeiger
- 24: zweiter Hilfskraftkreis
- 25: Elektromagnetventil
- 26: Elektronik-Einheit
- 27: erster Sensor
- 28: zweiter Sensor
- 29: -
- 30: Servomotor
- 31: Servopumpe
- 32: Behälter
- 33: Elektromotor
- 34: Durchflußanzeiger

## Patentansprüche

1. Hilfskraftlenkung für Kraftfahrzeuge, insbesondere für Nutzfahrzeuge, mit folgenden Merkmalen:
- es sind wenigstens zwei hydraulisch voneinander getrennte Hilfskraftkreise vorgesehen, von denen wenigstens der erste einen Servomotor mit einem durch die Kraft eines hydraulischen Druckmittels verschiebbaren Arbeitskolben (3) enthält;
- ein Steuerventil (18) dient zum Steuern des hydraulischen Druckmittels zu und von den Arbeitsräumen (12, 13) des Servomotors;
- ein Lenkgetriebe (2) dient zum Umwandeln einer Drehbewegung einer Lenkspindel (15) in eine hin- und hergehende Bewegung des Arbeitskolbens (3),
- die mit einem Lenkhandrad (16) versehene Lenkspindel (15) ist über eine Torsionsfeder (14) mit einem Eingangsglied des Lenkgetriebes (2) verbunden,
- ein Ausgangsglied des Lenkgetriebes (2) ist mit zu lenkenden Rädern (11) des Kraftfahrzeugs verbunden,
**gekennzeichnet** durch folgende Merkmale:
- Wenigstens ein erster Sensor (27) zum Erfassen eines Drehwinkels und/oder eines Drehmomentes ist an der Lenkspindel (15) angeordnet,
- wenigstens ein zweiter Sensor (28) zum Erfassen eines Lenkwinkels ist an dem Eingangs- oder an dem Ausgangsglied des Lenkgetriebes (2) angeordnet,
- die Größe und die Richtung der hydraulischen Hilfskraftunterstützung in dem zweiten Hilfskraftkreis (24) werden über ein gemeinsames, elektronisch gesteuertes Elektromagnetventil (25) gesteuert.

2. Hilfskraftlenkung für Kraftfahrzeuge nach Anspruch 1, dadurch **gekennzeichnet**, daß das Elektromagnetventil (25) die hydraulische Unterstützung der Rückstellung des Lenkgetriebes (2) und der zu lenkenden Räder (11) nach einem Loslassen des Lenkhandrades (16) nach einem Lenkvorgang steuert.

3. Hilfskraftlenkung für Kraftfahrzeuge nach einem der Ansprüche 1 oder 2, dadurch **gekennzeichnet**, daß eine Parameter-Einrichtung vorgesehen ist für eine Beeinflussung der Hilfskraftunterstützung der beiden Hilfskraftkreise über eine Elektronik-Einheit (26) in Abhängigkeit von wenigstens einem Parameter, wie Fahrgeschwindigkeit des Fahrzeugs, Lenkgeschwindigkeit, Giergeschwindigkeit, Beladung des Fahrzeugs, und anderen.

4. Hilfskraftlenkung für Kraftfahrzeuge nach Anspruch 3, dadurch **gekennzeichnet**, daß der zweite Hilfskraftkreis (24) gegenüber dem ersten Hilfskraftkreis voreilt.

5. Hilfskraftlenkung nach einem der Ansprüche 1 bis 4, dadurch **gekennzeichnet**, daß die Sensoren (27, 28) und die Elektronik-Einheit (26) redundant ausgeführt sind.

## Claims

1. Power-assisted steering for motor vehicles, in particular for commercial vehicles, having the following features:
- at least two power-assisted circuits which are hydraulically separated from one another are provided, at least the first of which contains a servomotor having a working piston (3) which can be displaced by the force of a hydraulic pressure medium;
- a control valve (18) is used for controlling the hydraulic pressure medium fed to and taken from the working spaces (12, 13) of the servomotor;
- a steering mechanism (2) is used for converting a rotational movement of a steering shaft (15) into a reciprocating movement of the working piston (3),
- the steering shaft (15), which is provided with a steering wheel (16), is connected via a torsion spring (14) to an input element of the steering mechanism (2),
- an output element of the steering mechanism (2) is connected to motor-vehicle wheels (11) which are to be steered,
characterized by the following features:
- at least one first sensor (27) for detecting an angle of rotation and/or a torque is arranged on the steering shaft (15),
- at least one second sensor (28) for detecting a steering angle is arranged on the input element or on the output element of the steering mechanism (2),
- the extent and the direction of the hydraulic power assistance in the second power-assisted circuit (24) are controlled via a common, electronically controlled solenoid valve (25).

2. Power-assisted steering for motor vehicles according to Claim 1, characterized in that the solenoid valve (25) controls the hydraulic power assistance for the resetting of the steering mechanism (2) and the wheels (11) to be steered after the steering wheel (16) has been released following a steering operation.

3. Power-assisted steering for motor vehicles according to one of Claims 1 or 2, characterized in that a parameter device is provided for influencing the power assistance of the two power-assisted circuits via an electronic unit (26) as a function of at least one parameter, such as driving speed of the vehicle, steering speed, yaw speed, loading of the vehicle etc.

4. Power-assisted steering for motor vehicles according to Claim 3, characterized in that the second power-assisted circuit (24) runs at a higher speed than the first power-assisted circuit.

5. Power-assisted steering according to one of Claims 1 to 4, characterized in that the sensors (27, 28) and the electronic unit (26) are of redundant design.

## Revendications

1. Direction assistée pour véhicules, en particulier pour véhicules utilitaires, ayant les caractéristiques suivantes :
- il est prévu au moins deux circuits de direction assistée séparées hydrauliquement l'un de l'autre, dont au moins le premier comprend un servomoteur avec un piston de travail (3) déplaçable par la force d'un fluide de travail hydraulique ;
- une soupape de commande (18) sert à la commande du fluide de travail hydraulique vers et depuis les chambres de travail (12, 13) du servomoteur ;
- un mécanisme de direction (2) sert à convertir un mouvement de rotation d'un arbre de direction (15) en un mouvement de va-et-vient du piston de travail (3),
- l'arbre de direction (15) pourvu d'un volant de direction (16) est connecté par le biais d'un ressort de torsion (14) à un organe d'entrée du mécanisme de direction (2),
- un organe de sortie du mécanisme de direction (2) est connecté aux roues à diriger (11) du véhicule,
caractérisée par les caractéristiques suivantes :
- au moins un premier détecteur (27) pour la détection d'un angle de rotation et/ou d'un couple est disposé sur l'arbre de direction (15),
- au moins un deuxième détecteur (28) pour la détection d'un angle de direction est disposé sur l'organe d'entrée ou sur l'organe de sortie du mécanisme de direction (2),
- la taille et la direction du support de direction assistée hydraulique dans le deuxième circuit de direction assistée (24) sont commandées par le biais d'une électrovanne (25) commune, à commande électronique.

2. Direction assistée pour véhicules selon la revendication 1, caractérisée en ce que l'électrovanne (25) commande le support hydraulique du rappel du mécanisme de direction (2) et des roues à diriger (11) après un relâchement du volant de direction (16) après une opération de direction.

3. Direction assistée pour véhicules selon l'une quelconque des revendications 1 ou 2, caractérisée en ce qu'un dispositif de paramètres est prévu pour influencer le support de direction assistée des deux circuits de direction assistée par le biais d'une unité électronique (26) en fonction d'au moins un paramètre, tel que la vitesse du véhicule, la vitesse de direction, la vitesse de lacet, la charge du véhicule, et autres.

4. Direction assistée pour véhicules selon la revendication 3, caractérisée en ce que le deuxième circuit de direction assistée (24) est en avance de phase par rapport au premier circuit de direction assistée.

5. Direction assistée pour véhicules selon l'une quelconque des revendications 1 à 4, caractérisée en ce que les détecteurs (27, 28) et l'unité électronique (26) sont réalisés en tant qu'éléments redondants.
